**Europäisches Patentamt**

**European Patent Office**

**Office européen des brevets**

(11) Veröffentlichungsnummer : **0 490 810 A1**

(12) **EUROPÄISCHE PATENTANMELDUNG**

(21) Anmeldenummer : **91810887.9**

(22) Anmeldetag : **15.11.91**

(51) Int. Cl.$^5$ : **F25B 31/00**

(30) Priorität : **11.12.90 CH 3915/90**

(43) Veröffentlichungstag der Anmeldung :
**17.06.92 Patentblatt 92/25**

(84) Benannte Vertragsstaaten :
**AT BE CH DE ES LI NL**

(71) Anmelder : **GEBRÜDER SULZER
AKTIENGESELLSCHAFT
Zürcherstrasse 12
CH-8401 Winterthur (CH)**

(72) Erfinder : **Vögeli, August
Wolfbühlstrasse 34a
CH-8408 Winterthur (CH)**

(54) **Verfahren zum Betreiben einer NH3-Kälteanlage oder -Wärmepumpe.**

(57) Mit der Erfindung ist eine NH$_3$-Kälteanlage oder -Wärmepumpe mit einem Kondenser (2), mit einer Expansionseinrichtung (3) mit einem Verdampfer (4) und mit einem Kältemittelverdichter (1) gezeigt, der NH$_3$ fördert und komprimiert. Als Schmiermittel (22) wird dem Kältemittelverdichter (1) mit einer Schmiereinrichtung (23) ein flüssiger Stoff aus der Gruppe der Polyalkylenglykole zugeführt. Die im Kältemittelverdichter (1) dem Förderstrom des Kältemittels beigemischten Schmiermittelanteile laufen mit dem Förderstrom mit. Im Verdampfer (4) wird Verdampferflüssigkeit (20) in einem Teilstrom abgezweigt und über einen Schmiermittelaustreiber (5) und einen Abscheider (17) Schmiermittel (22) flüssig konzentriert und der Schmiereinrichtung (23) zugeführt, während der verdampfte Anteil des Teilstroms in den Hauptförderstrom zurückgeführt wird.

Fig.1

EP 0 490 810 A1

Die Erfindung betrifft ein Verfahren zum Betreiben einer $NH_3$-Kälteanlage oder -Wärmepumpe mit einem Kondenser, mit einer Expansionseinrichtung, mit einem Verdampfer und mit einem Kältemittelverdichter, der $NH_3$ fördert und komprimiert.

$NH_3$-Kälteanlagen werden normalerweise als geschlossene Kältemittelkreisläufe betrieben, in denen ein Kältemittelverdichter dampfförmiges Kältemittel aus einem Verdampfer ansaugt, komprimiert und an einen Kondenser weitergibt. Als Verdichter werden je nach Fördermenge volumetrisch fördernde Verdichter oder Zentrifugalkompressoren eingesetzt. Beide Bauformen weisen Reibstellen an Lagern und dynamischen Dichtstellen auf, die dem Ammoniak des Kältekreislaufs ausgesetzt sind und deren Temperatur auf genügendem Sicherheitsabstand unter der Zersetzungstemperatur des Ammoniaks gehalten werden sollte. Bisher hat man Mineralöle als Schmiermittel eingesetzt, um die Reibungsverhältnisse zu verbessern, wobei Mineralöle mit $NH_3$ praktisch nicht löslich sind und bei tiefen Temperaturen grosse Zähigkeit aufweisen. Dies führt dazu, dass das Ausschleusen von Mineralöl, das im Ammoniakstrom aus dem Kältemittelverdichter mitgerissen wird, sehr aufwendige Oelabscheider erfordert, da es sich als Film an kälteren Benetzungsflächen absetzt, den Wärmeübergang in Wärmetauschern verschlechtert, sich in Ventilen und Regelorganen störend auswirkt und sich schlussendlich als Sumpf in einem Verdampfer absetzt. Aus Sicherleitsgründen werden die Oelrückstände an Sammelstellen, denen flüssiges Ammoniak überlagert ist, periodisch von Hand ausgeschleust. Die Reinigung solcher Kälteanlagen von Oelrückständen ist eine prozessunterbrechende und kostenintensive Angelegenheit.

Hier schafft die Erfindung Abhilfe. Aufgabe der Erfindung ist es, als Schmiermittel geeignete Stoffe für Kältemittelverdichter in $NH_3$-Anlagen zu finden und einen ihren Eigenschaften entsprechende Einsatz aufzuzeigen.

Gemäss der Erfindung wird die Aufgabe dadurch gelöst, dass dem Kältemittelverdichter mit einer Schmiereinrichtung als Schmiermittel ein flüssiger Stoff aus der Gruppe der Polyalkylenglykole zugeführt wird, dass die im Kältemittelverdichter dem Förderstrom des Kältemittels beigemischten Schmiermittelanteile mit dem Förderstrom mitlaufen und dass Verdampferflüssigkeit in einem Teilstrom abgezweigt wird und über einen Schmiermittelaustreiber und einen Abscheider Schmiermittel flüssig konzentriert und der Schmiereinrichtung zugeführt wird, während der verdampfte Anteil des Teilstroms in den Hauptförderstrom zurückgeführt wird.

Die Vorteile der Erfindung sind darin zu sehen, dass die Verschmutzung durch Schmiermittel in Ammoniak-Kälteanlagen oder -Wärmepumpen verringert wird. Wegen der praktisch immer vorhandenen Löslichkeit des Schmiermittels bildet sich kein bleibender Schmiermittelfilm auf den Wärmetauscherflächen. Ausserdem wird kontinuierlich Schmiermittel, das in den Hauptförderstrom des Kältemittels gelangt, separiert und zur Schmiereinrichtung zurückgeführt, sodass sich ein Gleichgewichtszustand für den Schmiermittelanteil in den verschiedenen Anlagekomponenten einstellt. Ein weiterer Vorteil besteht darin, dass eine einfache Ueberwachung des Schmiermittelanteils im Kältemittelkreislauf ermöglicht wird, indem einmalig der Anlage eine Sollmenge zugegeben wird, die ohne Entfernung des Kältemittels austauschbar ist. Die anhängigen Ansprüche 2, 3 und 5, 6 beziehen sich auf vorteilhafte Weiterbildungen der Erfindung.

Im folgenden wird die Erfindung anhand von einem Ausführungsbeispiel beschrieben. Es zeigen:

Fig. 1 schematisch einen $NH_3$-Kältemittelkreislauf mit einer Schmiermittelrückführung aus dem Hauptförderstrom des Kältemittels; und

Fig. 2 schematisch für Polyalkylenglykole in Abhängigkeit von der Temperatur die Löslichkeit mit $NH_3$ und bei verschiedenen konzentrationen die dynamische Zähigkeit.

In den Figuren ist eine $NH_3$-Kälteanlage oder -Wärmepumpe mit einem Kondenser, mit einer Expansionseinrichtung mit einem Verdampfer und mit einem Kältemittelverdichter gezeigt, der $NH_3$ fördert und komprimiert. Als Schmiermittel wird dem Kältemittelverdichter mit einer Schmiereinrichtung ein flüssiger Stoff aus der Gruppe der Polyalkylenglykole zugeführt. Die im Kältemittelverdichter dem Förderstrom des Kältemittels beigemischten Schmiermittelanteile laufen mit dem Förderstrom mit. Im Verdampfer wird Verdampferflüssigkeit in einem Teilstrom abgezweigt und über einen Schmiermittelaustreiber und einen Abscheider Schmiermittel flüssig konzentriert und der Schmiereinrichtung zugeführt, während der verdampfte Anteil des Teilstroms in den Hauptförderstrom zurückgeführt wird.

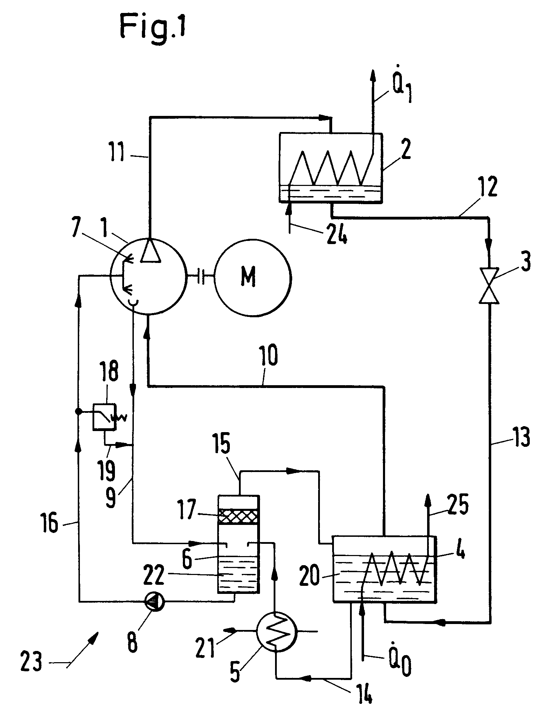

In Fig. 1 ist der Kältemittelkreislauf einer $NH_3$-Kälteanlage gezeigt. Ein Kältemittelverdichter 1 saugt über eine Ansaugleitung 10 dampfförmiges Ammoniak bei niederer Temperatur aus einem Verdampfer 4 an, und stösst es komprimiert und durch die Kompression erwärmt über eine Austrittsleitung 11 in den Kondenser 2. Beim Durchlaufen des Kondensers wird der Förderstrom abgekühlt und kondensiert. Die frei werdende Kondensationswärme $\dot{Q}_1$ wird dabei an einen Heizstrom 24 abgegeben. Der flüssige Förderstrom gelangt über einer Verbindungsleitung 12 in die Expansionseinrichtung 3 in der der Förderstrom annähernd auf Verdampfungsdruck entspannt wird und über eine Verbindungsleitung 13 in den Verdampfer 4. Mit der Expansion des Ammoniaks in der Expansionseinrichtung 3 findet eine Temperatursenkung statt, die so tief geht, dass der Förderstrom im Verdampfer 4 einem Kältestrom 25 die notwendige Verdampfungswärme $\dot{Q}_0$ entzieht.

Dem Kältemittelverdichter 1 wird Schmiermittel 22 aus einem Schmiermitteltank 6 über eine Hilfspumpe 8 und eine Verbindungsleitung 16 zugeführt. Das Schmiermittel wird über Düsen oder Blenden an die Schmierstellen des Verdichters geführt und ausserhalb der Schmierstellen weitgehend abgefangen, um über eine Verbindungsleitung 9 in den Schmiermitteltank 6 zurückgeführt zu werden. Die Hilfspumpe 8 fördert eine bestimmte Ueberschussmenge an Schmiermittel 22 die über ein Druckhalteventil 18 und Verbindungsleitung 19 in die Verbindungsleitung 9 abgesteuert wird. Für eine gute Schmierwirkung lässt es sich besonders bei volumetrisch fördernden Kältemittelverdichtern nicht vermeiden, dass kontinuierlich Schmiermittel in den $NH_3$-Förderstrom gelangt und in der Anlage verteilt wird.

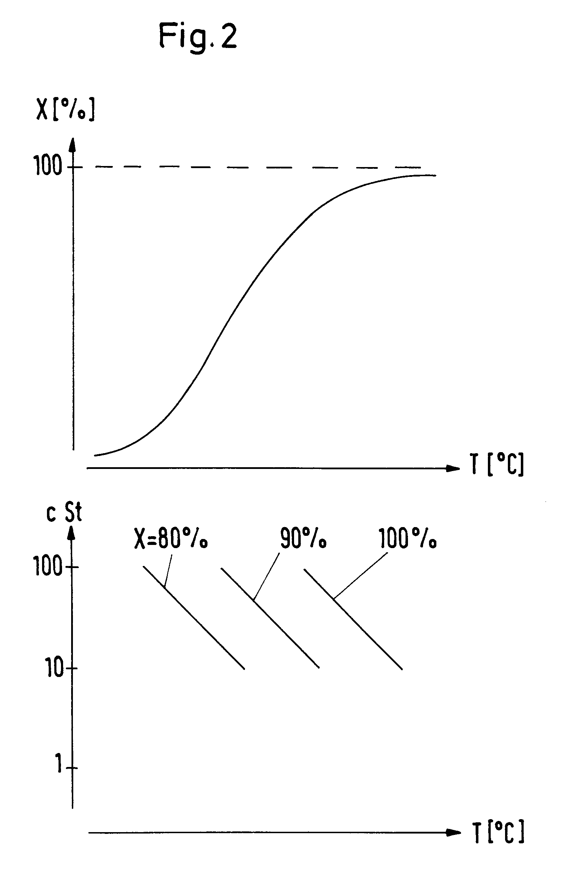

Durch die Wahl von einem Stoff aus der Gruppe der Polyalkylenglykole als Schmiermittel wird das Problem der Anlageverschmutzung wegen Anreicherung von Schmiermittel weitgehend gelöst. Polyalkylenglykole sind mit $NH_3$ löslich, wobei der Lösungsanteil X des Polyalkylenglykols mit fallender Temperatur abnimmt, während er bei höheren Temperaturen sehr hohe Werte annimmt. In Fig. 2 ist der Lösungsanteil X in $NH_3$ in Abhängigkeit von der Temperatur T dargestellt. Für die Löslichkeit ist entscheidend, dass Äthylen- und Propylen-Copolymere vorhanden sind, wobei sich ein Verhältnis von Äthylenoxid:Propylenoxid = 4:1 als besonders günstig gezeigt hat. Die Viskosität des Polyalkylenglykols wird durch die Anzahl der Wiederholungen in den Copolymeren beeinflusst. Sie hängt ebenfalls vom Anteil des im Polyalkylenglykol gelösten $NH_3$ ab. In Fig. 2 ist ebenfalls in Abhängigkeit von der Temperatur T gezeigt wie sich die dynamische Zähigkeit in Centi-Stokes für ein als Schmiermittel 22 vorgesehenes Polyalkylenglykol bei unterschiedlichen Konzentrationen X ändert. Für eine gute Schmierwirkung sollte das dem Kältemittelverdichter 1 zugeführte Schmiermittel 22 mindestens 80 % Polyalkylenglykol enthalten.

Das im Hauptförderstrom des Kältemittels mitgenommene Polyalkylenglykol sammelt sich im Verdampfer 4 wegen der geringeren Löslichkeit bei tiefen Temperaturen. Der Anteil würde ständig ansteigen und anfangen sich nachteilig auf die Verdampfung auszuwirken. Aus diesem Grund sollte im Verdampfer 4 der Anteil von Polyalkylenglykol bezogen auf die im Verdampfer befindliche Menge an $NH_3$ unter 8 % gehalten werden.

Zur Erhaltung eines Gleichgewichtszustandes mit einem Anteil von weniger als 8 % Polyalkylenglykol im Verdampfer 4 muss in diesem Zustand gleichviel Polyalkylenglykol aus dem Verdampfer 4 entfernt werden wie dem Hauptförderstrom im Kältemittelverdichter 1 beigemischt wird. Zu diesem Zweck wird von der Verdampferflüssigkeit 20 ein Teilstrom, der etwas mehr Polyalkylenglykol enthält als im Kältemittelverdichter dem Hauptförderstrom beigemischt wird, abgezweigt und über eine Verbindungsleitung 14 einem Schmiermittelaustreiber 5 zugeführt. Dem Schmiermittelaustreiber 5 wird durch eine Heizleitung 21 Wärme zugeführt, die hauptsächlich zur Verdampfung vom Ammoniak führt. Der Teilstrom wird weiter durch einen Abscheider 17 geführt, in welchem ein konzentrierter Anteil an flüssigem Polyalkylenglykol anfällt, der dem Schmiermittel 22 im Schmiermitteltank 6 zugemischt wird. Das verdampfte $NH_3$ wird vom Abscheider 17 über eine Verbindungsleitung 15 in den dampfförmigen Hauptförderstrom zwischen Verdampfer 4 und Kältemittelverdichter 1 zurückgeführt.

## Patentansprüche

1. Verfahren zum Betreiben einer $NH_3$-Kälteanlage oder -Wärmepumpe mit einem Kondenser, mit einer Expansionseinrichtung, mit einem Verdampfer und mit einem Kältemittelverdichter, der $NH_3$ fördert und komprimiert, **dadurch gekennzeichnet,** dass dem Kältemittelverdichter (1) mit einer Schmiereinrichtung (23) als Schmiermittel (22) ein flüssiger Stoff aus der Gruppe der Polyalkylenglykole zugeführt wird, dass die im Kältemittelverdichter (1) dem Förderstrom des Kältemittels beigemischten Schmiermittelanteile mit dem Förderstrom mitlaufen und dass Verdampferflüssigkeit (20) in einem Teilstrom abgezweigt wird und über einen Schmiermittelaustreiber (5) und einen Abscheider (17) Schmiermittel (22) flüssig konzentriert und der Schmiereinrichtung (23) zugeführt wird, während der verdampfte Anteil des Teilstroms in den Hauptförderstrom zurückgeführt wird.

2. Verfahren nach Anspruch 1, dadurch gekennzeichnet, dass das dem Kältemittelverdichter (1) zugeführte Schmiermittel (22) zu mehr als 80 % aus Polyalkylenglykolen besteht.

3. Verfahren nach Anspruch 1 oder 2, dadurch gekennzeichnet, dass bei kontinuierlichem Betrieb bezogen auf die in dem Verdampfer (4) befindliche Menge an $NH_3$ der Anteil von Polyalkylenglykolen im Verdampfer (4) unter 8 % liegt.

4. Verwendung von Polyalkylenglykolen als Schmiermittel (22) zum Schmieren von mechanischen Komponenten in $NH_3$-Kälteanlagen oder -Wärmepumpen.

5. Verwendung von Polyalkylenglykolen nach Anspruch 4, dadurch gekennzeichnet, dass sie Äthylen- und Propylen-Copolymere aufweisen.

6. Verwendung von Polvalkylenglykolen nach Anspruch 5, dadurch gekennzeichnet, dass Äthylen-Propylen-Copolymere in einem Verhältnis von Äthylenoxid:Propylenoxid = 4:1 darin enthalten sind.

# Fig.1

# Fig. 2

Europäisches
Patentamt

# EUROPÄISCHER RECHERCHENBERICHT

Nummer der Anmeldung

EP    91 81 0887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 111 661 (STAL REFRIGERATION)<br>* Seite 1 - Seite 2, Zeile 88; Abbildung *<br>--- | 1,2,4-6 | F25B31/00 |
| Y | EP-A-0 400 894 (DU PONT)<br>* Seite 3, Zeile 19 - Zeile 47; Ansprüche 1,11-15 *<br>--- | 1,2,4-6 | |
| A | US-A-3 777 509 (MUENCH)<br>* Spalte 2, Zeile 50 - Spalte 3, Zeile 14; Abbildung *<br>----- | 1 | |
| | | | **RECHERCHIERTE SACHGEBIETE (Int. Cl.5)**<br><br>C09K<br>F25B |

Der vorliegende Recherchenbericht wurde für alle Patentansprüche erstellt

| Recherchenort | Abschlußdatum der Recherche | Prüfer |
|---|---|---|
| DEN HAAG | 30 JANUAR 1992 | BAECKLUND O.A. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument

EPO FORM 1503 03.82 (P0403)